# EUROPEAN PATENT SPECIFICATION

(11) **EP 2 319 291 B1**
(45) Date of publication and mention of the grant of the patent: **20.06.2012**
(21) Application number: 10189763.5
(22) Date of filing: 03.11.2010
(51) Int. Cl.: A01F 15/08

(54) **Method of controlling a combination of a tractor and a baler coupled to the tractor**
Verfahren zur Steuerung einer Kombination eines Traktors und einer am Traktor angekoppelten Ballenpresse
Procédé de contrôle d'une combinaison d'un tracteur et ramasseuse-presse couplée au tracteur

(30) Priority: 06.11.2009 US 613814
(43) Date of publication of application: 11.05.2011
(73) Proprietor: DEERE & COMPANY, Moline, Illinois 61265-8098 (US)
(72) Inventor: Martin, Michael J., Waterloo, IA 50701 (US); Kilworth, Timothy J., Waverly, IA 50677 (US); Muench, Peter, 67105, Schifferstadt (DE); Neermann, Benjamin, 68307 Mannheim (DE); Newendorp, Bruce C., Cedar Falls, IA 50613 (US); Davis, Travis J., Cedar Falls, IA 50613 (US)
(74) Representative: Dehnhardt, Florian Christopher

(56) References cited:
- EP-A1- 2 052 598
- EP-A2- 1 813 146
- US-A1- 2009 107 102

## Description

The present invention relates to a method of controlling a combination of a tractor and a baler coupled to the tractor.

A combination of a tractor and a baler is used in agriculture applications to take up crop lying or standing on a field and to press and bind it to a bale. Such a combination with automatically controlled operations is described in prior art document US 7 404 355 B2.

EP 2 052 598 A1 discloses a tractor comprising an electronic tractor controller and a baler with an electronic baler controller. The baler controller is operable to submit a halt signal to the tractor controller when a bale size signal provided by a bale size sensor indicates that a bale size has reached a predetermined size. The tractor controller then halts the tractor and the bale Is wrapped.

When a tractor is pulling a baler through a field it is necessary to keep the tractor stationary while the bale is ejected and the rear gate of the baler is closed. Many times an operator will re-initiate motion before the rear gate is fully closed and latched. This can prevent the cycle from completing successfully. With a baler, material may get caught In the rear gate and prevent It from fully closing. This results In lost time while the rear gate is re-opened, the debris is removed, and the rear gate is closed again. Also, If the bale ejection cycle Is initiated before the bale is fully wrapped, the bale may unwrap after the ejection resulting in either loss of the material or loss of time to re-bale the material.

With an automatic control system, it is possible to determine when it is appropriate to move on to the next step of the operation. For example, eject the bale and/or re-initiate motion once the bale has been ejected. The automatic control system thereby provides additional opportunities to ensure that the operation is completed successfully in the correct order. In the case of ejecting a bale prematurely, the automatic control system of re-initiating motion before the bale ejection cycle is complete, it can prevent the tractor from moving even if the operator attempts to start motion. It Is not always feasible for an automatic control system to fully encompass all of the many exceptions to the normal field operations and/or sequences. For these cases, it would be desirable to provide the operator a relatively simple way to override the mistake proofing features.

Accordingly, an object of this invention is to provide an improved method of controlling a combination of a tractor and a baler coupled to the tractor which easily allows the operator to override the mistake proofing features of an automatic control system.

This and other objects are achieved by the present invention, wherein a method is provided of controlling a combination of a tractor and a baler coupled to the tractor. The tractor includes rear wheels driven by an engine which is coupled to the rear wheels by a transmission, an operator movable command device and a tractor control unit operable to control tractor motion In response to operation of the command device. The baler includes a baler system for receiving crop, for baling crop into a bale and for ejecting a bale from the baler, and a baler control unit coupled to the baler system and to the tractor control unit. The method includes the baler control unit generating a tractor halt signal in response to a request of the baler system and the tractor control unit preventing tractor motion in response to the tractor halt signal. The method includes, when the tractor halt signal Is generated, the tractor control unit enabling motion of the tractor if the operator Issues a command for the tractor to move by manipulating the command device, and within a predetermined time period of said command being issued, the baler control unit generates a tractor motion enabling signal in response to a current operating condition of the baler system.

The method further includes, when the tractor halt signal is generated, the tractor control unit enabling motion of the tractor if the operator issues a command for the tractor to move by manipulating the command device, and within a predetermined time period after said command being Issued, the baler control unit generates a tractor motion enabling signal In response to a current operating condition of the baler system.

The method also includes, when the tractor halt signal is generated, the tractor control unit enabling motion of the tractor If the operator issues a command for the tractor to move by manipulating the command device, and within a predetermined time period before said command being Issued, the baler control unit generates a tractor motion enabling signal in response to a current operating condition of the baler system.

The method further includes, when the tractor halt signal is generated, the tractor control unit enabling motion of the tractor if the operator moves the tractor command device according to a predetermined characteristic.

The automatic control system provides several opportunities to prevent operator mistakes during normal operation. The operator still has the possibility to override the automatic control system using the command device In an Intuitive manner.

For a complete understanding of the objects, techniques, and structure of the invention reference should be made to the following detailed description and accompanying drawings, wherein similar components are designated by identical reference numerals:
- Fig. 1: Is a simplified side view of a tractor with a baler coupled to the tractor,
- Fig. 2: is a schematic diagram of an automatic control system comprising a tractor control unit and a baler control unit, and
- Fig. 3: Is a logic flow diagram of an algorithm executed by the automatic control sys- tem shown In Fig. 2.

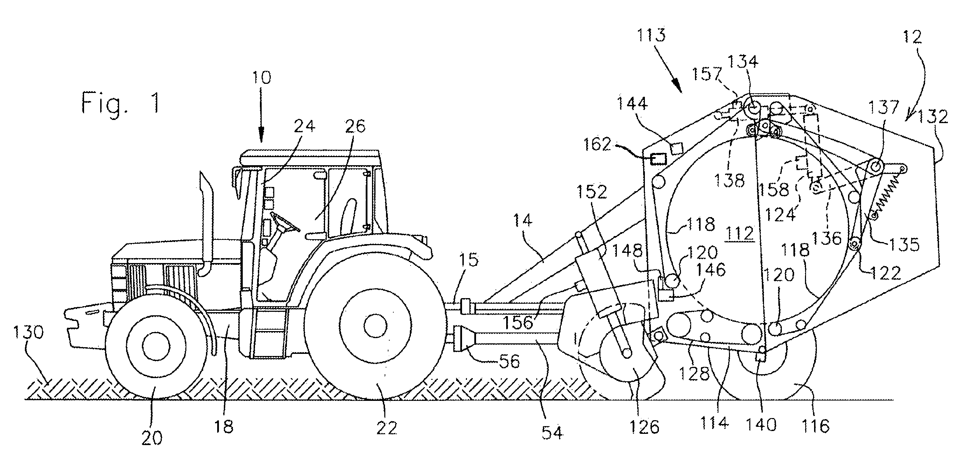

Fig. 1 shows a tractor 10 and a round baler 12 coupled to a tractor drawbar 15 by means of a baler drawbar 14. The tractor 10 is supported on a frame 18, which is supported on steerable front wheels 20 and driven rear wheels 22. The frame 18 supports a cab 24 which includes an operator station 26. The tractor 10 includes a conventional power take-off or PTO shaft 56 which is connected to a drive shaft 54 of the baler 12.

The baler 12 includes a baler frame 114 supported on wheels 116. The frame 114 supports a baler system 113 which includes a baling chamber 112 surrounded by aprons 118 guided around rollers 120. An arm 135 supporting a roller 122 can be moved upwardly and downwardly by means of a hydraulic cylinder 124. The hydraulic cylinder 124 is connected to the arm 135 via a lever 136 that is pivotally about a horizontal axis 137. The hydraulic cylinder 124 thus determines the tension of the aprons 118. Below the front edge of the baler 12, a crop receiving pickup 126 with tines moving or rotating around a transverse axis is followed in a crop flow direction by a conveyor belt 128. The conveyor belt 128 could also be replaced by a rotor (not shown), or a rotor could be inserted in the crop flow direction between the crop receiving pickup 126 and the conveyor belt 128. Instead of the crop receiving pickup 126, any other suitable crop receiving means could be used, like mowing and conveying units. The crop receiving pickup 126 collects crop lying in a swath 130 of grass, hay or straw on the field and feeds it into the baling chamber 112. The aprons 118 define a baling chamber 112 of a variable size. The aprons 118 are set into motion in their longitudinal direction during a baling process, since one or more of the rollers 120 are rotatively driven. The crop introduced into the baling chamber 112 is thus also rotating during baling, while the size of the baling chamber 112 increases over time since the bale causes arm 135 to move downwardly against the force of the hydraulic cylinder 124.

A rear gate 132 is pivotally mounted to an upper rear location of the frame 114 at an axis 134 extending transversely to the forward direction of the tractor 10 and the baler 12. An actuator 138 in the form of a hydraulic cylinder is mounted with one end to the frame 114 and with a second end to the rear gate 132. The rear gate 132 supports the rollers 120 surrounding the rear part of the baling chamber 112. The actuator 138 is connected to the rear gate 132 such that it can pivot the rear gate 132 upwardly (in Fig. 1 counter-clockwise) around axis 134 to be able to eject a bale from the baling chamber 112.

A rear gate sensor 140 is mounted at the lower rear end of the baler frame 114 close to the lower front edge of the rear gate 132. Rear gate sensor 140 senses whether the rear gate 132 is closed or not by means of a switch (not shown) actuated by rear gate 132.

Three bale size sensors 144 connected to a microprocessor-based baler control unit 162 are distributed over the width of the baling chamber 112. They sense the distance to the surface of the bale and/or of the aprons 118 abutting the bale surface and provide thus information about the bale diameter at their respective location along the width of the bale. A first one of the bale size sensors 144 is assigned to a position close to the left edge of the baling chamber 112. A second one of the bale size sensors 144 is assigned to a position close to the center of the baling chamber 112. A third one of the bale size sensors 144 is assigned to a position close to the right edge of the baling chamber 112.

A wrapping material dispenser 146 is located close to the baling chamber 112. The wrapping material dispenser 146 is connected to the baler control unit 162 and dispenses, once instructed so by the baler control unit 162, a wrapping material like twine, ribbon, net or wrapping sheet to the baling chamber 112. The rotating bale catches or pulls the wrapping material such that it is then wrapped around the bale. A wrapping material movement sensor 148 is interacting with the wrapping material dispenser 146 and senses whether the bale is pulling the wrapping.

The crop receiving pickup 126 can be lifted by a hydraulic cylinder 152. Sensors 156 and 158 provide information about the position of the hydraulic cylinders 152 and 124 to the baler control unit 162. Another sensor 157 senses the position of the actuator 138 or of the rear gate 132.

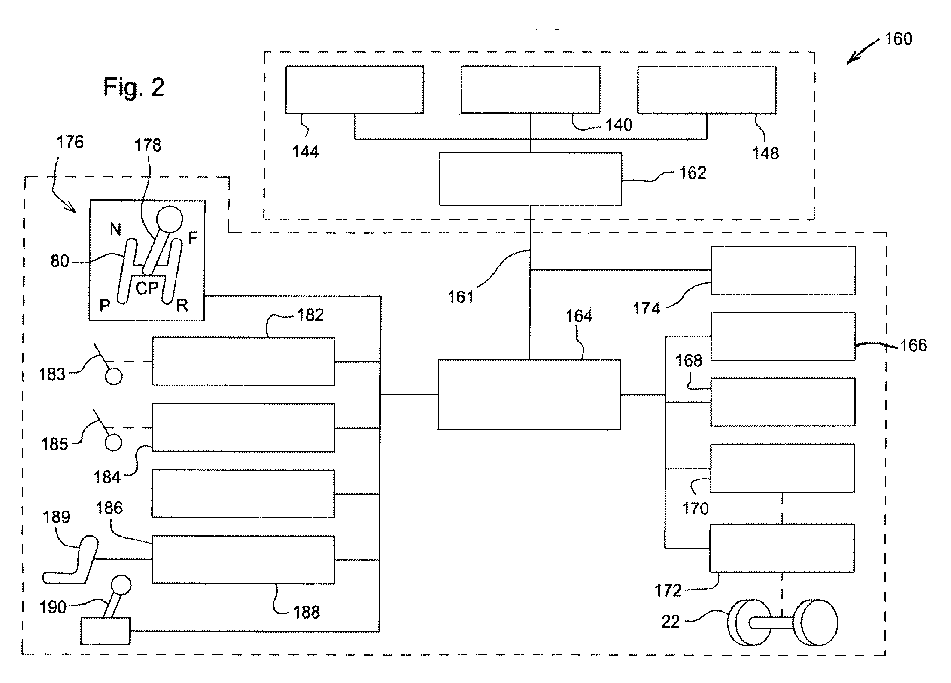

Referring now to Fig. 2, an automatic control system 160 includes the baler control unit 162 which is mounted on the baler 12 and which is connected to the bale size sensors 144, the rear gate sensor 140 and the wrapping material movement sensor 148. Baler control unit 162 is connected via a conventional data bus 161, such as a CAN bus, to a tractor control unit 164.

The tractor control unit 164 preferably includes one or more conventional microprocessor-based control devices (not shown) which control various tractor systems and components, such as brakes 166, a clutch 168, an engine 170 and a transmission 172. The engine 170 drives the transmission 172 which in turn drives the rear wheels 22. The transmission 172 is preferably a known infinitely variable transmission (IVT).

An interface and/or display unit 174 is connected to the tractor control unit 164 through the data bus 161. The tractor control unit 164 receives transmission command signals from a command device formed by a direction reverser control 176 which has a control lever 178 movable in an H-shaped slot 180 to neutral N, center park CP, park P, forward F and reverse R positions. The tractor control unit 164 also receives signals from a clutch pedal sensor 182 coupled to a clutch pedal 183, a brake pedal sensor 184 coupled to a brake pedal 185, a wheel speed sensor 186 for determining the wheel speed, an operator presence sensor 188 coupled to a seat 189, and a selective control valve (SCV) lever 190. The selective control valve lever 190 can be manipulated by the operator to control functions on the baler 12, such as rear gate 132.

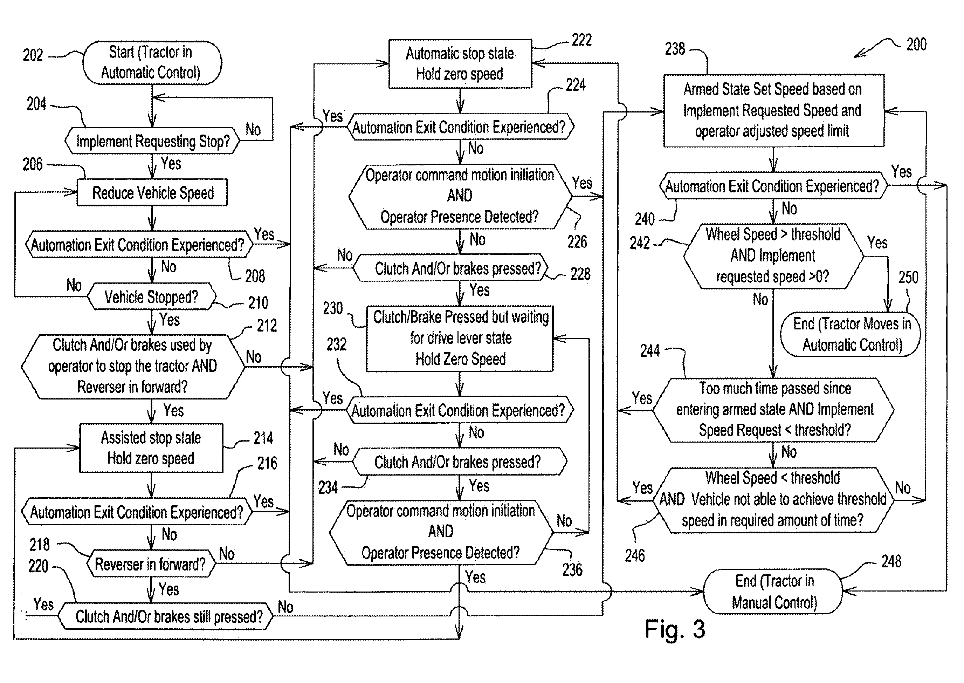

Referring now to the logic flow diagram of Fig. 3, the tractor control unit 164 executes an algorithm 200. The conversion of logic flow diagram into a standard language for implementing the algorithm 200 in a microprocessor will be evident to one with ordinary skills in the art.

The algorithm 200 begins at step 202 when the tractor control unit 164 is in an automatic mode.

Step 204 directs control to step 206 if the baler control unit 162 has requested stopping of the tractor 10 or has issued a tractor halt signal, else step 204 repeats.

Step 206 generates a reduce speed command that causes the tractor control unit 164 to slow down the tractor 10 and directs control to step 208.

Step 208 directs control to step 248 if an automation exit condition exists, else to step 210. An automation exit condition can exist for a variety of reasons, such as when the operator generates an override command, the operator presence sensor 188 detects that the operator is out of the seat 189, there is a system fault, or there is a loss of communication in the system.

Step 210 directs control to step 212 if the tractor 10 has stopped, else back to step 206.

Step 212 directs control to step 214 if the clutch 168 or brakes 166 have been used to stop the tractor 10 and the control lever 178 is in its forward position, else to step 222.

Step 214 generates a hold zero speed command and directs control to step 216.

Step 216 directs control to step 248 if an automation exit condition exists, else to step 218.

Step 218 directs control to step 220 if the control lever 178 is in its forward position, else to step 222.

Step 220 directs control to step 214 if the clutch 168 and/or the brakes 166 are still pressed, else to step 238.

Step 222 establishes an automatic stop state and generates a hold zero speed command and directs control to step 224.

Step 224 directs control to step 248 if an automation exit condition exists, else to step 226.

Step 226 directs control to step 238 if the operator commands tractor motion and operator presence is detected by operator presence sensor 188, else to step 228.

Step 228 directs control to step 230 if the clutch 168 and/or the brakes 166 are still pressed, else to step 222.

Step 230 generates a hold zero speed command and directs control to step 232.

Step 232 directs control to step 248 if an automation exit condition exists, else to step 234.

Step 234 directs control to step 236 if the clutch 168 and/or the brakes 166 are still pressed, else to step 222.

Step 236 directs control to step 214 if the operator commands tractor motion and operator presence is detected by operator presence sensor 188, else to step 230.

Step 238 establishes an armed state, and sets the tractor speed based on the speed requested by the baler 12 and an operator adjusted speed limit and directs control to step 240. Typically, the operator sets the speed limit with the traditional operator controls. The speed limit is the speed that the tractor 10 would be going if it were in manual control.

Step 240 directs control to step 248 if an automation exit condition exists, else to step 242.

Step 242 directs control to step 250 if the tractor wheel speed is greater than a threshold (such as 0.5 kph, for example) and the speed requested by the baler 12 is greater than zero, else to step 244.

Step 244 directs control to step 222 if more than a predetermined time period (such as 1.0 second) has expired since step 238 was executed and the speed requested by the baler 12 is less than a threshold (such as 0.5 kph, for example), else to step 246.

Step 246 directs control to step 222 if the tractor wheel speed is less than a threshold (such as 0.5 kph, for example) and the tractor 10 has been unable to reach the threshold speed within a predetermined time period (such as 0.5 seconds), else to step 238.

Step 248 ends automatic control of the tractor 10 so that the operator can manually control the tractor speed with the control lever 178.

Step 250 ends this subroutine and the tractor 10 is allowed to move under automatic control.

As a result, the algorithm 200 operates to perform a method in which the baler control unit 162 generates a tractor halt signal in response to a request of the baler system 113, such as when the rear gate 132 is open, and the tractor control unit 164 prevents tractor motion in response to the tractor halt signal. When the baler control unit 162 is generating the tractor halt signal, the tractor control unit 164 enables motion of the tractor 10 if the operator issues a command for the tractor 10 to move by manipulating the control lever 178 according to a predetermined characteristic, and within a predetermined time period, before or after, of the command being issued, the baler control unit 162 generates a tractor motion enabling signal in response to a current operating condition of the baler system 113.

With this method the tractor 10 remains stationary while the baler 12 is requesting zero speed. Once the baler 12 requests non-zero speed, the operator must move the control lever 178 from center park CP to forward F to re-initiate forward motion. If the operator does this before the baler 12 requests a non-zero speed, motion will not be initiated and the control lever 178 must be cycled again after the baler 12 requests a non-zero speed. If the operator feels it is necessary to begin moving before the baler 12 is ready, the control lever 178 can be moved to a position other than forward F or center park CP (e.g. reverse R or neutral N) and the tractor 10 will respond to this and subsequent exits automation. This differs from the use of the selective control valve lever 190 because moving the control lever 178 between forward F and center park CP is part of the normal behavior to re-initiate forward motion. In addition, if the brakes 166 and/or the clutch 168 were activated during stopping, releasing them will result in the same behavior as moving the control lever 178 from center park CP to forward F. When the capability is provided by the transmission 172, it will go to powered zero while stopped. When this capability is not available, the transmission 172 will go to neutral during stop and to park if the clutch 168 is released prematurely.

## Claims

1. A method of controlling a combination of a tractor and a baler coupled to the tractor, the tractor (10) including rear wheels (22) driven by an engine (170) which is coupled to the rear wheels (22) by a transmission (172), an operator movable command device (176) and a tractor control unit (164) operable to control tractor motion in response to operation of the command device (176), the baler (12) including a baler system (113) for receiving crop, for baling crop into a bale and for ejecting a bale from the baler (12), and a baler control unit (162) coupled to the baler system (113) and to the tractor control unit (164), wherein the baler control unit (162) generating a tractor halt signal in response to a request of the baler system (113) and the tractor control unit (164) preventing tractor motion in response to the tractor halt signal, and when the tractor halt signal is generated, the tractor control unit (164) enabling motion of the tractor (10) if the operator issues a command for the tractor (10) to move by manipulating the command device (176), and within a predetermined time period of said command being issued, the baler control unit (162) generates a tractor motion enabling signal in response to a current operating condition of the baler system (113).

2. The method according to claim 1, **characterized in that**, when the tractor halt signal is generated, the tractor control unit (164) enabling motion of the tractor (10) if the operator issues a command for the tractor (10) to move by manipulating the command device (176), and within a predetermined time period after said command being issued, the baler control unit (162) generates a tractor motion enabling signal in response to a current operating condition of the baler system (113).

3. The method according to claim 1, **characterized in that**, when the tractor halt signal is generated, the tractor control unit (164) enabling motion of the tractor (10) if the operator issues a command for the tractor (10) to move by manipulating the command device (176), and within a predetermined time period before said command being issued, the baler control unit (162) generates a tractor motion enabling signal in response to a current operating condition of the baler system (113).

4. The method according to claim 1, **characterized in that**, when the tractor halt signal is generated, the tractor control unit (164) enabling motion of the tractor (10) if the operator moves the tractor command device (176) according to a predetermined characteristic.

## Patentansprüche

1. Verfahren zur Steuerung einer Kombination eines Traktors und einer am Traktor angekoppelten Ballenpresse, wobei der Traktor (10) Hinterräder (22), die von einem Motor (170) angetrieben sind, der über ein Getriebe (172) an die Hinterräder (22) gekoppelt ist, eine von der Bedienperson bewegbare Befehlsvorrichtung (176) und eine Traktorsteuereinheit (164) aufweist, die dahingehend betreibbar ist, Traktorbewegung als Reaktion auf die Betätigung der Befehlsvorrichtung (176) zu steuern, wobei die Ballenpresse (12) ein Ballenpresssystem (113) aufweist, um Erntegut aufzunehmen, um Erntegut in einen Ballen zu pressen und um einen Ballen aus der Ballenpresse (12) auszuwerfen, sowie eine Ballenpressensteuereinheit (162), die an das Ballenpresssystem (113) und an die Traktorsteuereinheit (164) gekoppelt ist, wobei die Ballenpressensteuereinheit (162) als Reaktion auf eine Anforderung des Ballenpresssystems (113) ein Traktorhaltsignal erzeugt und die Traktorsteuereinheit (164) als Reaktion auf das Traktorhaltsignal Traktorbewegung verhindert und die Traktorsteuereinheit (164) Bewegung des Traktors (10) freigibt, wenn das Traktorhaltsignal erzeugt wird, falls die Bedienperson einen Befehl erteilt, dass sich der Traktor (10) bewegt, indem sie die Befehlsvorrichtung (176) betätigt, und die Ballenpressensteuereinheit (162) innerhalb einer vorbestimmten Zeitdauer nach der Befehlserteilung als Reaktion auf eine gegenwärtige Betriebsbedingung des Ballenpresssystems (113) ein Traktorbewegungsfreigabesignal erzeugt.

2. Verfahren nach Anspruch 1, **dadurch gekennzeichnet, dass** die Traktorsteuereinheit (164) Bewegung des Traktors (10) freigibt, wenn das Traktorhaltsignal erzeugt wird, falls die Bedienperson einen Befehl erteilt, dass sich der Traktor (10) bewegt, indem sie die Befehlsvorrichtung (176) betätigt, und die Ballenpressensteuereinheit (162) innerhalb einer vorbestimmten Zeitdauer nach der Befehlserteilung als Reaktion auf eine gegenwärtige Betriebsbedingung des Ballenpresssystems (113) ein Traktorbewegungsfreigabesignal erzeugt.

3. Verfahren nach Anspruch 1, **dadurch gekennzeichnet, dass** die Traktorsteuereinheit (164) Bewegung des Traktors (10) freigibt, wenn das Traktorhaltsignal erzeugt wird, falls die Bedienperson einen Befehl erteilt, dass sich der Traktor (10) bewegt, indem sie die Befehlsvorrichtung (176) betätigt, und die Ballenpressensteuereinheit (162) innerhalb einer vorbestimmten Zeitdauer nach der Befehlserteilung als Reaktion auf eine gegenwärtige Betriebsbedingung des Ballenpresssystems (113) ein Traktorbewegungsfreigabesignal erzeugt.

4. Verfahren nach Anspruch 1, **dadurch gekennzeichnet, dass** die Traktorsteuereinheit (164) Bewegung des Traktors (10) freigibt, wenn das Traktorhaltsignal erzeugt wird, falls die Bedienperson die Traktorbefehlsvorrichtung (176) nach einer vorbestimmten Charakteristik bewegt.

## Revendications

1. Procédé de contrôle d'une combinaison d'un tracteur et d'une ramasseuse-presse couplée au tracteur, le tracteur (10) comportant des roues arrière (22) entraînées par un moteur (170) qui est couplé aux roues arrière (22) par une transmission (172), un dispositif de commande (176) qui peut être déplacé par un opérateur et une unité de contrôle de tracteur (164) permettant de contrôler le mouvement du tracteur en réponse à l'actionnement du dispositif de commande (176), la ramasseuse-presse (12) comportant un système de ramasseuse-presse (113) pour recevoir une récolte, pour mettre en balle la récolte et pour éjecter une balle de la ramasseuse-presse (12), et une unité de contrôle de ramasseuse-presse (162) couplée au système de ramasseuse-presse (113) et à l'unité de contrôle de tracteur (164), l'unité de contrôle de ramasseuse-presse (162) produisant un signal d'arrêt de tracteur en réponse à une requête du système de ramasseuse-presse (113), et l'unité de contrôle de tracteur (164) empêchant le mouvement du tracteur en réponse au signal d'arrêt de tracteur, et lorsque le signal d'arrêt de tracteur est produit, l'unité de contrôle de tracteur (164) autorisant le mouvement du tracteur (10) si l'opérateur émet une commande de mouvement du tracteur (10) en manipulant le dispositif de commande (176), et dans une période de temps prédéterminée à partir de l'émission de ladite commande, l'unité de contrôle de ramasseuse-presse (162) produit un signal d'autorisation de mouvement de tracteur en réponse à un état de fonctionnement courant du système de ramasseuse-presse (113).

2. Procédé selon la revendication 1, **caractérisé en ce que**, lorsque le signal d'arrêt de tracteur est produit, l'unité de contrôle de tracteur (164) autorise le mouvement du tracteur (10) si l'opérateur émet une commande de mouvement du tracteur (10) en manipulant le dispositif de commande (176), et dans une période de temps prédéterminée après l'émission de ladite commande, l'unité de contrôle de ramasseuse-presse (162) produit un signal d'autorisation de mouvement de tracteur en réponse à un état de fonctionnement courant du système de ramasseuse-presse (113).

3. Procédé selon la revendication 1, **caractérisé en ce que**, lorsque le signal d'arrêt de tracteur est produit, l'unité de contrôle de tracteur (164) autorise le mouvement du tracteur (10) si l'opérateur émet une commande de mouvement du tracteur (10) en manipulant le dispositif de commande (176), et dans une période de temps prédéterminée avant l'émission de ladite commande, l'unité de contrôle de ramasseuse-presse (162) produit un signal d'autorisation de mouvement de tracteur en réponse à un état de fonctionnement courant du système de ramasseuse-presse (113).

4. Procédé selon la revendication 1, **caractérisé en ce que**, lorsque le signal d'arrêt de tracteur est produit, l'unité de contrôle de tracteur (164) autorise le mouvement du tracteur (10) si l'opérateur déplace le dispositif de commande de tracteur (176) selon une caractéristique prédéterminée.
